Europäisches Patentamt

European Patent Office

Office européen des brevets

(19)

(11) **EP 1 494 490 A1**

(12) # EUROPEAN PATENT APPLICATION

(43) Date of publication:
**05.01.2005 Bulletin 2005/01**

(51) Int Cl.⁷: **H04Q 7/36**

(21) Application number: **03291608.2**

(22) Date of filing: **30.06.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Motorola Inc.**
**Schaumburg, IL 60196 (US)**

(72) Inventors:
• **Motte, Nicolas**
  **91120 Palaiseau (FR)**
• **Bourse, Didier**
  **91120 Palaiseau (FR)**

• **Elicegui, Lucas**
  **92140 Clamart (FR)**
• **Grandblaise, David**
  **75005 Paris (FR)**
• **Pintenet, Remy**
  **78600 Le Mesnil le Roi (FR)**

(74) Representative:
**Cross, Rupert Edward Blount et al**
**BOULT WADE TENNANT,**
**Verulam Gardens**
**70 Gray's Inn Road**
**London WC1X 8BT (GB)**

(54) **Dynamic allocation of communication spectrum between different radio access technologies**

(57)    The invention relates to radio communication between base stations (37) and terminals (38), in which the base stations and the terminals are capable of communication using a plurality of different radio access technologies (RAT #1, RAT #2, RAT #3), and are controllable to select the radio access technology used. Allocation to different radio access technologies (RAT #1, RAT #2, RAT #3) of respective portions (7, 8, 9) of radio spectrum for communication comprises: establishing traffic parameters relating to traffic for the different radio access technologies, estimating spectrum need data ($L\_P(t)$) for the different radio access technologies in response to the traffic parameters, deriving from the estimated spectrum need data ($L\_P(t)$) a plurality of potential allocations ($S\_P(t)$) of the portions (7, 8, 9) of spectrum to the different radio access technologies (RAT #1, RAT #2, RAT #3), calculating frequency guard bands (10, 11) between frequency communication bands (7, 8, 9) of different radio access technologies (RAT #1, RAT #2, RAT #3) in the different potential spectrum allocations, estimating performance parameters ($E\_P(t)$) of the potential allocations of spectrum with the calculated guard bands (10, 11), and responding to the traffic parameters and to the performance parameters to select a potential allocation of spectrum ($S\_A(t)$) to be implemented by the base stations (37) and terminals (38).

FIG. 3

EP 1 494 490 A1

**Description**

<u>Field of the invention</u>

This invention relates to dynamic allocation of communication spectrum between different radio access technologies.

<u>Background of the invention</u>

Radio resource is a scarce and expensive commodity and is licensed to different operators with conditions of utilisation attached to the licences. A range of wireless communication systems are available that operate different analogue and digital radio access technologies ('RAT'), including cellular (second generation (2G), third generation (3G), etc.), digital video broadcast (DVB), wireless local area networks (WLAN) such as Hiperlan/2, IEEE 802.11, and personal area networks (PANs) such as Bluetooth. One known spectrum allocation licence principle is to allocate a fixed amount of spectrum in a particular radio access technology ('RAT') to each operator. The operators are committed to fulfil certain objectives in terms of the amount of traffic they service and the coverage area they provide. If the operators do not fulfil these objectives, part of their spectrum may be reallocated to other operator's in need of such spectrum.

However, this approach has the disadvantage that the assessment of whether the objectives are met and subsequent re-allocation of spectrum if they are not met takes weeks if not months to implement. Furthermore, the spectrum usage for a particular operator is limited to the licensed RAT and the spectrum utilisation is sub-optimal. The spectrum allocation is uniform in time and geograhic extent, whereas the traffic is time and space variant. A more dynamic way of allocating spectrum according to traffic needs is therefore required.

The patent specifications US 5 034 993 and EP1 220 557 describe sharing a portion of frequency spectrum between different operators, that is to say inter-system sharing, which partially alleviates some of the above problems.

The introduction of reconfigurable equipment (Terminals, Base Stations and Access Points), sometimes referred to as Software Definable Radio equipment, offers operators the possibility of more flexible management of their licensed spectrum. Thus, reconfigurable terminals are able to change softly not only their working frequencies but also their working radio air interfaces. Furthermore, it is no longer technologically necessary to limit frequency spectrum licences to a particular Radio Access Technology (RAT).

In order to take full advantage of these properties and also optimise the spectrum use, various spectrum scenarios introducing more or less flexibility for operators are possible. These scenarios present a lot of advantages if the operator is able to manage his spectrum depending on his needs.

A functional architecture enabling the introduction of Joint Radio Resource Management in a heterogeneous environment has been introduced in the context of the European Union Information Society Technology ('IST') SCOUT project. An architecture of this kind is described in the paper 'Luo, M. Dillinger and E. Mohyeldin, "Radio Resource Management Schemes Supporting Reconfigurable Terminals", 2nd Karlsruhe Workshop on Software Radios, 20/21, March, 2002, Karlsruhe, Germany'. This architecture enables the management of intra-system handovers, that is to say transferring communications of a terminal from one RAT to another in response to varying traffic conditions.

The present invention enables the allocation of available radio spectrum between different RATs so that an operator can manage his spectrum with more flexibility.

<u>Summary of the invention</u>

The present invention provides a as described in the accompanying claims.

<u>Brief description of the drawings</u>

Figure 1 is a schematic diagram showing a method of radio frequency spectrum allocation between operators in accordance with one embodiment of the invention, given by way of example,

Figure 2 is a schematic diagram showing a method of radio frequency spectrum allocation to different radio access technologies within the allocation of spectrum to an operator according to the method of Figure 1,

Figure 3 is a block diagram of apparatus for performing the method of Figure 2,

Figure 4 is a schematic diagram showing exchanges of messages in operation of the apparatus of Figure 3,

Figure 5 is a schematic diagram showing flexibility for handovers between different radio access technologies and for frequency spectrum re-allocation with a system in accordance with an embodiment of the present invention,

Figure 6 is a block diagram of apparatus for performing the method of Figure 5,

Figure 7 is a block diagram of a spectrum pattern optimiser in the apparatus of Figure 3,

Figure 8 is a more detailed block diagram of the spectrum pattern optimiser of Figure 7,

Figure 9 is a schematic diagram showing the operation of the spectrum pattern optimiser of Figure 7 and Figure 8, and

Figure 10 is a block diagram of a communication system including the the apparatus of Figure 6.

Detailed description of the preferred embodiments

The embodiment of the present invention illustrated in the accompanying drawings presents a functional architecture enabling an operator to manage his spectrum with more flexibility. In particular, the architecture allows the implementation of a flexible spectrum strategy scenario.

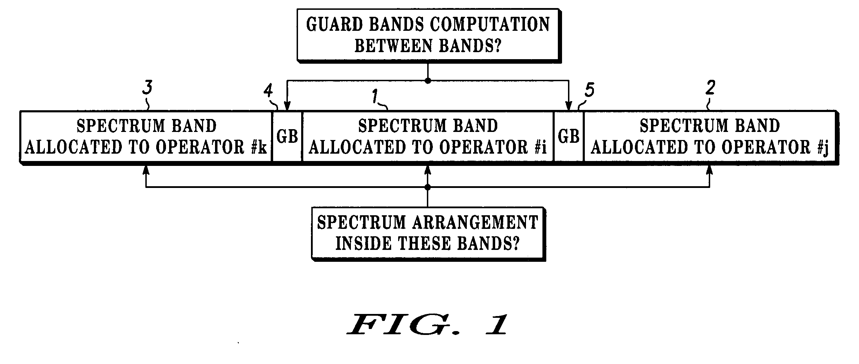

In this flexible spectrum strategy scenario, instead of the operator receiving from the regulator a licence allowing him to operate a specified Radio Access Network in a specific frequency band, he receives a licence to operate any existing RAT in a given frequency band, which allows the operator to manage his spectrum depending on his needs. Figure 1 illustrates this scenario for three operators #i, #j and #k, who are allocated portions 1, 2 and 3 of spectrum, respectively, separated by guard bands 4 and 5. In such a scenario, each operator is responsible for the allocation of parts of their spectrum portions 1, 2 and 3 respectively to different RATs. It will be appreciated that, although the licensed spectrum portions 1, 2 and 3 are shown as each being continuous, it would be possible for them to be discontinuous and, in particular, for them to be interleaved.

This scenario raises certain problems for which this embodiment of the present invention offers solutions, in particular to the dynamic spectrum arrangement, and to the management of the guard band computation, inside the operator's band.

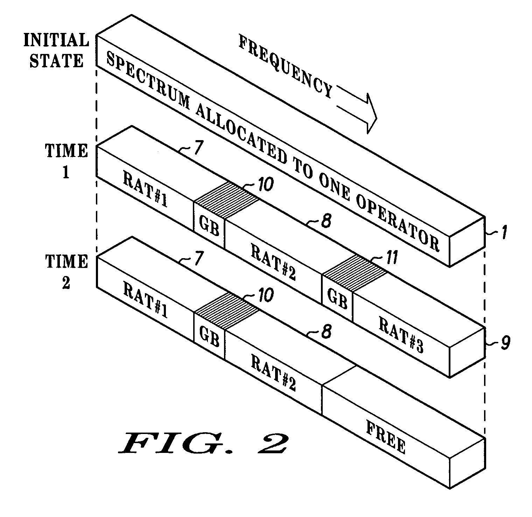

Figure 2 represents an example of the operation of the scenario for the operator #i. In the initial state, the operator receives from the regulator the licensed portion 1 of spectrum. The operator then distributes parts 6, 7 and 8 of this portion of spectrum between the different radio access technologies RAT#1, RAT#2 and RAT#3 that he wants to operate, trying to match his future needs and maintaining guard bands 10 and 11 between adjacent RATs, as shown at Time 1. If a RAT does not operate at a given time, the operator then releases the occupied spectrum and the released spectrum is available for use by another RAT, as shown at Time 2.

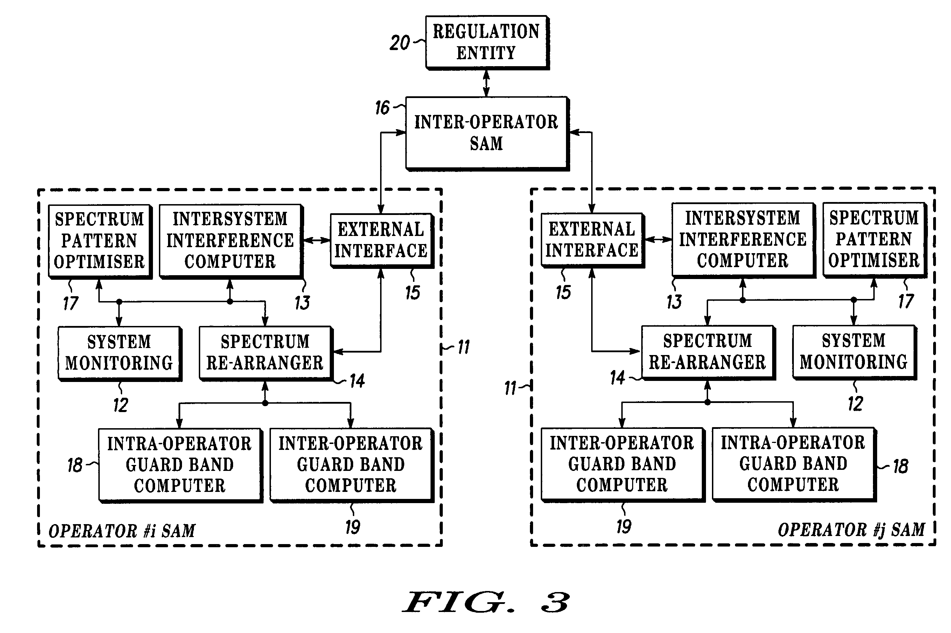

Figure 3 shows the architecture of this embodiment of the present invention, which enables a more flexible spectrum management for one or several operators. Each network operator has his own Spectrum Allocation Manager 11, which optimises the spectrum resource use. The Spectrum Allocation Manager 11 is composed of different entities, each of which handles specific tasks. First of all, the operator characterises the current radio conditions in his system, and more particularly, it measures parameters traffic parameters relating to traffic for the different radio access technologies. In order to do this, the Spectrum Allocation Manager 11 comprises a Systems Monitoring Unit 12 and an Interference Computer 13.

The Systems Monitoring Unit 12 monitors and collects statistics that are available for the different RATs. Depending on certain criteria, such as the load, the percentage of blocking, the number of Dynamic Frequency Selections triggered for a WLAN system, it sends a warning message with relevant information, such as monitored criteria figures, to a Spectrum Re-Arranger 14. If necessary, the Spectrum Re-Arranger 14 orders the Systems Monitoring Unit 12 to gather further information in order to have a better knowledge of the current situation. In this case the Systems Monitoring Unit 12 requests this additional information directly from the relevant RAT of the relevant area.

The Interference Computer 13 has several functions. First, it checks whether the allocation made by the operator is compatible; this means that interference between the RATs of the operator (i.e. within the portion of spectrum allocated to the operator) are lower than a certain threshold. If this is not the case, it sends a warning message to the Spectrum Re-Arranger 14, as it means that current inside-band allocations are unsuitable. Another function is to control inter-system interference from other operators. This function could be triggered at periodic intervals but, in this embodiment of the invention, it is triggered at specified instants defined by the Spectrum Re-Arranger 14. If this inter-system interference becomes higher than a certain threshold, the Interference Computer 13 contacts directly an External Interface 15 to signal the excessive inter-system interference to an Inter-Operator Spectrum Allocation Manager 16, which is in communication with the External Interfaces 15 of the Spectrum Allocation Managers 11 of the other operators, the Spectrum Re-Arranger 14 of the operator #i also receiving the excessive inter-system interference signal and the interpreting the response of the Inter-Operator Spectrum Allocation Manager 16.

A Spectrum Pattern Optimiser 17 generates estimated spectrum need data concerning future potential spectrum allocations in response to the traffic parameters from the Systems Monitoring Unit 12 and the Interference Computer 13 and sends the data to the Spectrum Re-Arranger 14. The Spectrum Pattern Optimiser 17 collects in a data base statistics of historical usage of different spectrum allocation schemes by the operator as a function of date, time and geographical location, and the performance of these schemes. This collection of statistics occurs periodically and after computing, it is exploited to derive a long-term prediction on the usage of a given potential spectrum allocation. Then, depending on the correlation of the statistics with parameters such as the date, the period of time and the geographical location, for example, it predicts the performance of potential spectrum allocations for the operator. These predictions are sent to the Spectrum Re-Arranger 14.

The Spectrum Re-Arranger 14 receives information from the Spectrum Pattern Optimiser 17, the Systems Monitoring Unit 12 and the Interference Computer 13. In response to this information, the Spectrum Re-Arranger 14 derives from the estimated spectrum need data several (three to five in order to limit the complexity) potential spectrum allocation options. In order to validate these potential spectrum allocation schemes, it sends them to an Intra-Operator Guard Band Computer 18.

The Intra-Operator Guard Band Computer 18 computes the minimum necessary guard bands such as 10 and 11 between the frequency allocations for the different RATs of the operator for each of the envisaged solutions and communicates the guard bands to the Spectrum Re-Arranger 14. The Spectrum Re-Arranger 14 eliminates any solutions that are not feasible, because of lack of spectrum after taking account of the guard bands, for example.

The Spectrum Re-Arranger 14 obtains information through the External Interface 15 from the Inter-Operator Spectrum Allocation Manager 16 concerning actual or potential inter-system interference from neighbouring operators. The Spectrum Re-Arranger 14 sends this information to an Inter-Operator Guard Band Computer 19, which computes the necessary inter-operator guard bands 4 and 5 for the remaining solutions. The Spectrum Re-Arranger 14 then updates the envisaged solution. If necessary, the Intra-Operators Guard Band Computer is re-contacted if the inter-operators guard bands are too large.

The Spectrum Re-Arranger 14 selects for implementation by the base stations 37 and terminals 38 the best remaining potential allocation of the spectrum as a function of the traffic and performance parameters calculated by the Spectrum Pattern Optimiser 17 and orders the spectrum reconfiguration. The reconfiguration may be performed in various ways. In one example, the position and bandwidth for each RAT are calculated in the Spectrum Re-Arranger 14. The Spectrum Re-Arranger 14 then generates an overall scheme of carrier frequency allocations for each communicating terminal, base station and access point, at least for those RATS that offer the possibility of transmitting within a single band on different carrier frequencies, and for each geographical area. It then sends a signal to each communicating element informing it of the allocation of frequency and RAT to be used and triggers implementation of this new scheme.

The Inter-Operator Spectrum Allocation Manager 16 is a link between the different operators. It can be contacted for different reasons. First, it receives the operators' requests when they have to compute the inter-operators guard bands. The Inter-Operator SAM Spectrum Allocation Manager 16 responds with information as to the threshold inter-system interference must not exceed at a given place in the spectrum. This threshold is updated depending on the working RATs of operators. Secondly, the Inter-Operator Spectrum Allocation Manager 16 is contacted by an operator to signal excessive inter-system interference that is being experienced. If the excessive inter-system interference is coming from neighbouring operator transmitting improperly, the Inter-Operator Spectrum Allocation Manager 16 contacts the potential interferer and may require interference measurements to be performed. A signal is sent to the operator who is an interferer, who has the possibility to react. If he does not, a signal is also sent to a regulator entity 20 who oversees the legal obligations and is empowered to penalize the interferer. The Inter-Operator SAM Spectrum Allocation Manager 16 includes an inter-operator store in which inter-system interference is storedand from which it is retrieved as necessary for its internal functioning and for communication as necessary to the operators.

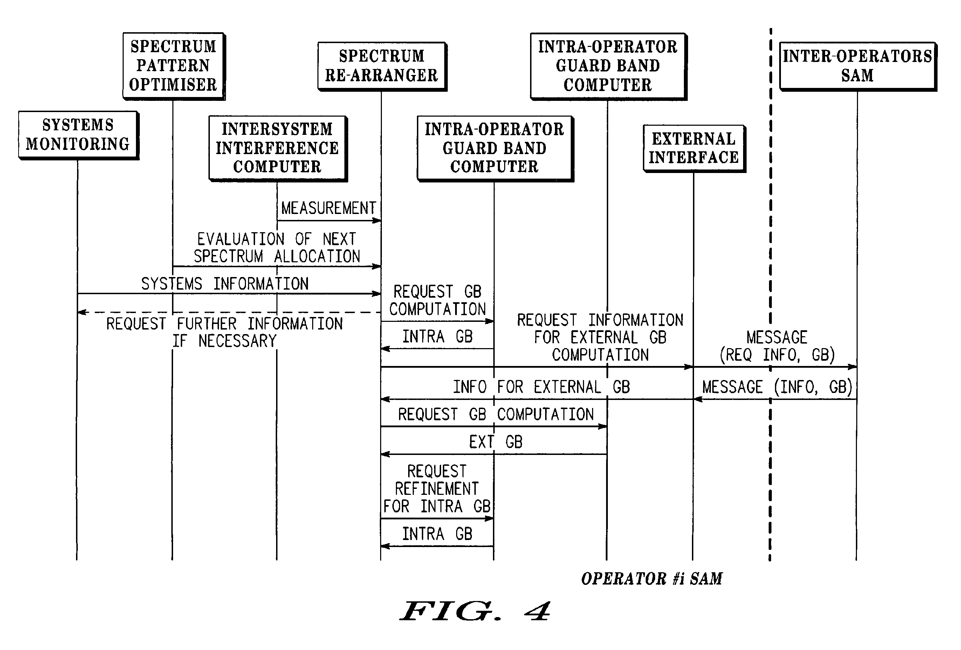

Figure 4 illustrates the flow of signals and messages between the elements of the system in an example of this embodiment of the invention.

The method and apparatus described above enables an operator to manage his spectrum with more flexibility but does not take into account the possibility for an operator to trigger intra-system handovers between his RATs, that is to say handovers of communications between base stations and terminals from one radio access technology to another, with or without simultaneous changes of frequency allocation. More particularly, implementing a selected RAT handover for a communication between a base station 37 and a terminal 38 that are communicating in one radio access technology consists of changing the radio access technology while continuing the communication uninterrupted. It will be appreciated that this is distinct from implementing a selected re-allocation of spectrum for communication between a base station 37 and a terminal 38 in a given radio access technology, which consists of continuing the communication in the same radio access technology with a different portion of the radio frequency spectrum.

Figure 5 illustrates different types of flexibility that an operator can use in order to improve further his spectrum efficiency. On one hand, as indicated by arrows 21, 22 and 23, he can order the triggering of intra-system handover between the different RATs he exploits in order to balance the load and better respond to the user's expectations in terms of QoS. In the preferred embodiment of this invention, this is performed using Joint Radio Resource Management. On the other hand, he can also use the flexibility allowed by Spectrum Allocation Manager 11 described previously and indicated by arrows 24 and 25. The application of intra-system handovers and spectrum re-allocations are concerted, since otherwise they could have conflicting impacts if triggered at the same time. If for instance, RAT#1 is overloaded, Joint Radio Resource Management would trigger intra-system handover from RAT#1 to RAT#2 and to RAT#3 but the Spectrum Allocation Manager 11 would take spectrum from RAT#2 and RAT#3 and re-allocate it to RAT#1. The result of thus using both technologies would be that RAT#2 and RAT#3 would become overloaded whilst RAT#1 would become under loaded.

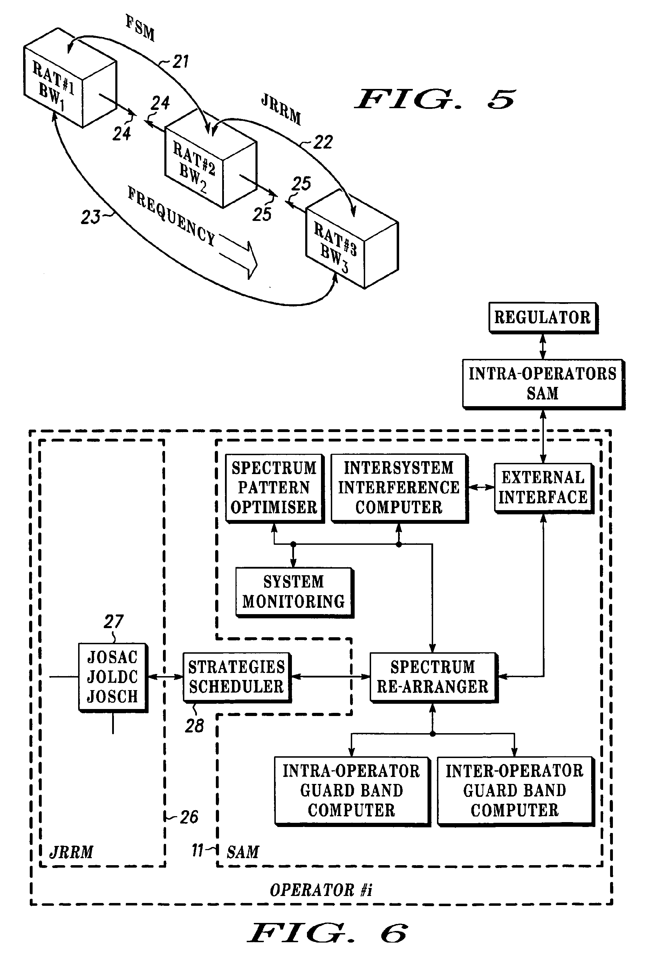

To avoid this risk of conflict, a preferred embodiment of the present invention comprises a common architecture for JRRM and SAM as shown in Figure 6. In this embodiment of the invention, the JRRM module 26 is as described in the paper by Luo, M. Dillinger and E. Mohyeldin, "Radio Resource Management Schemes Supporting Reconfigurable Terminals", 2nd Karlsruhe Workshop on Software Radios, 20/21, March, 2002, Karlsruhe, Germany; only the Joint Admission Controller (JOSAC) 27 is shown. The Spectrum Allocation Manager module 11 is as described above. In order to provide concerted operation of the JRRM and SAM modules 26 and 11, a Strategies Scheduler 28 is directly linked to the Spectrum Re-Arranger 14 and to the JOSAC 27. The JRRM module 26 establishes potential RAT handovers of at least some of the communications between base stations 37 and terminals 38 from one radio access technology to another. The Strategies Scheduler 28 responds to the potential strategies proposed by the JRRM and the SAM corresponding to a given problematic and decides on the best strategy to be adopted, which may be a single strategy, that is to say an allocation or an RAT handover, or a mixed strategy, being a combination of an allocation and an RAT handover.

In one example of operation of the apparatus shown in Figure 6, a potential action plan for the JRRM module 26 is to balance X Erlangs from RAT#1 to RAT#2, and a potential action plan for the SAM module 11 is to allocate Y MHz of bandwidth to RAT#1 knowing that RAT#2 must have a minimum bandwidth of Z MHz to avoid overloading situations. Each entity responds to the *Strategies Scheduler* specifying if the action plan is feasible or not. If not, the *Strategies Scheduler* envisages an other solution.

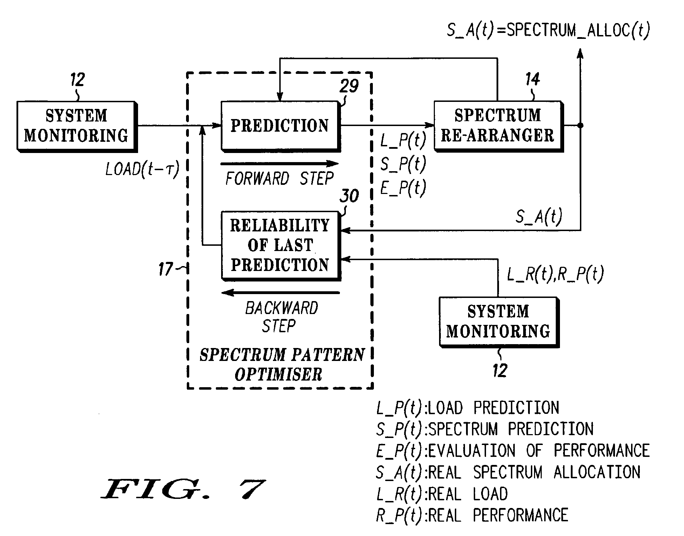

A preferred embodiment of the Spectrum Pattern Optimiser 17 is shown in Figure 7. In this embodiment, the Spectrum Pattern Optimiser 17 comprises two main elements: a prediction element 29, which proposes potential new spectrum allocations to the Spectrum Re-Arranger 14, and a reliability analysis element 30, which generates feedback on the quality of the last prediction in order to increase the prediction reliability.

In order to perform its prediction, the Spectrum Pattern Optimiser 17 receives from the Systems Monitoring Unit 12 an estimate of the current load Load($t-\tau$). Outputs of the Spectrum Pattern Optimiser 17 are: the Load Prediction L_P(t), the Spectrum Prediction S_P(t) and the Evaluation of Performance E_P(t) of the previous predictions L_P(t) and S_P(t). The Spectrum Prediction S_P(t) is composed of a set of bandwidths for the different available RATs: $S\_P(t) = (BW_{RAT\#1}; BW_{RAT\#2}; ...; BW_{RAT\#N})$, where $BW_{RAT\#i}$ is a multiple of the bandwidth granularity of RAT#i. As described above, the Spectrum Pattern Optimiser 17 does not directly re-allocate spectrum to the RATs nor compute the different needed guard bands. E_P(t) is an estimate of what would be the system performance under the load L_P(t) and using the spectrum allocation S_P(t); a parameter estimated is for instance the evaluation of the percentage of satisfaction. These three outputs (L_P(t), S_P(t), E_P(t)) are transmitted to the Spectrum Re-Arranger.

After a period of time T, which is large enough in order to have reliable statistics, the Systems Monitoring Unit 12 sends the real load value L_P(t) and the real performance value R_P(t). The Spectrum Re-Arranger 14 sends the current actual spectrum allocation for which statistics have been obtained.

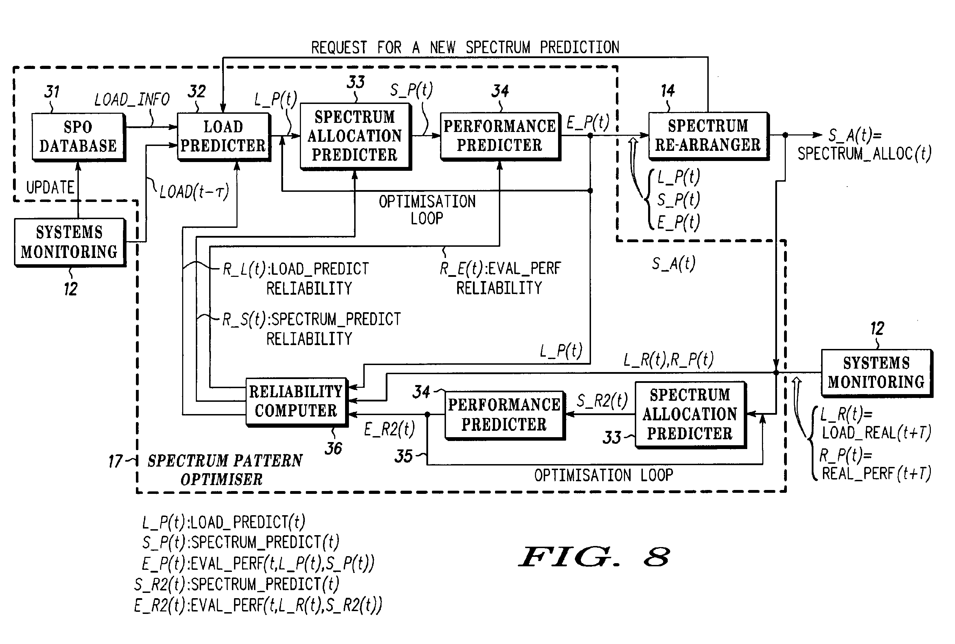

The structure of the Spectrum Pattern Optimiser 17 is shown in more detail in Figure 8, which shows the different parameters that are exchanged inside the Spectrum Pattern Optimiser entity 17 and the parameters that are exchanged between the Spectrum Pattern Optimiser 17, the Systems Monitoring Unit 12 and the Spectrum Re-Arranger 14.

The Spectrum Pattern Optimiser 17 comprises a database 31 that represents the experience of the Spectrum Pattern Optimiser. It contains historical spectrum usage data for previous spectrum allocations and this data is used in the prediction process. The actual results of past allocations are exploited to determine what would be the most appropriate spectrum allocation corresponding to observed initial conditions including load, date, time and geographical location. The information stored in this Database takes the following format:

$$Database[i] = [Date; \ Duration; \ \underline{Load}; \ \underline{Spectrum\ Allocation}; \ \underline{System\ Performance}]$$

where *Date* is the date when a new spectrum allocation was implemented, *Duration* is the lifetime of this new spectrum allocation, *Load* is a vector representing the mean value of the load taking into account pre-defined QoS classes (e. g. *Load* = {$Load_1$, $Load_2$...}), *Spectrum Allocation* is a matrix indicating the occupied bandwidth per RATs that were composing this spectrum allocation as well as the frequency f, where the RAT is allocated in the spectrum, e.g. RAT#i has a banwdwidth $BW_{RAT\#i}$ and its place in the spectrum is [$f_{RAT\#i}$; $f_{RAT\#i}$+$BW_{RAT\#i}$] and *System Performance* is a vector giving statistical information on the actual performance of such spectrum allocation for the different RATs as measured by the parameters satisfaction, blocking and Dynamic Frequency Selection (DFS). The database 31 is updated at the beginning and at the end of each new spectrum allocation receiving the needed information directly from the Systems Monitoring Unit 12.

The Spectrum Pattern Optimiser 17 also includes a Load Predicter 32, which responds to data from the database 31 for historical spectrum usage for dates and loads comparable to the current date and load. The Database 17 correlates the current date and load with stored data, selects the more relevant cases and sends corresponding data vectors {*Database*[i], *Database*[k], *Database*[l]...} to a Spectrum Allocation Predicter 33.

The Load Predicter 32 estimates the future load for the overall system. The Load Predicter 32 is the first entity in the prediction chain and has first to be triggered to perform a new spectrum prediction. This triggering could be directly done by the Spectrum Re-Arranger but in this embodiment, the Load Predicter 32 triggers itself periodically. In order to predict the future system load, this entity periodically receives information from the Systems Monitoring Unit 12 on the current load Load(t-$\tau$), $\tau$ being the delay to transmit the information through the infrastructure; which depends on the infrastructure involved (UMTS, GSM, WLAN...). When triggered, the Load Predicter 32 requests from the Database 31 information relevant to the current situation, as described above. Having received this information, the Load Predicter 32 performs its prediction *L_P(t)* taking into account the reliability associated with its last load prediction *R_L (t)*. *L_P(t)* could be expressed as follows:

$$L\_P(t) = \text{Load\_Predict}(Load\_Info, Load(t\text{-}\tau), R\_L(t))$$

*L_P(t)* may also be a vector of Load depending on pre-defined QoS classes as described for Database. It has also to be noticed that the Load_Predict function may be updated/modified according to the feedback received on the last load prediction. Then *L_P(t)* is sent to the Spectrum Allocation Predicter 33.

The Spectrum Allocation Predicter 33 responds to the predicted load *L_P(t)*, to propose potential sets of Bandwidths associated to different RATs to absorb *L_P(t)*. As explained above, a prediction *S_P(t)* can be written as:

$$S\_P(t) = (BW_{RAT\#1}; BW_{RAT\#2}; ...; BW_{RAT\#N}) = \text{Spectrum\_Predict}(L\_P(t), RAT\#1, ..., RAT\#N)$$

The Spectrum Allocation Predicter checks if the sum of the different bandwidths does not exceed the total available bandwidth. Since a given proposal of *S_P(t)* is not the unique solution to the raised problem, which is how to optimise the system performance for a load *L_P(t)* knowing the capabilities of the different RATs {*RAT#1, ..., RAT#N*}, *S_P(t)* will be first transmitted to a Performance Predicter 34 and an Optimisation Loop 35 then operates.

The Performance Predicter 34 receives the predicted load *L_P(t)* and the proposed spectrum allocation *S_P (t)* from the Spectrum Allocation Predicter 33and evaluates the expected system performance in these conditions *E_P (t)*:

$$E\_P(t) = \text{Eval\_Perf}(t, L\_P(t), S\_P(t))$$

*E_P(t)* is a vector composed of the individual RAT system performance indicators and of the overall system performance indicators. The Eval_Perf function is updated/modified according to the feedback received on the last performance prediction. At this stage, it is highly probable that the proposed solution is not optimal for all RATs and further iterations are needed through the optimisation loop 35.

The Spectrum Allocation Predicter 33 receives the performance evaluation *E_P(t)* of its prediction *S_P(t)* from the Performance Predicter through the Optimisation Loop 35. At this stage, different strategies are possible. In one embodiment, the Optimisation Loop 35 applies a different mapping between the different load of the *L_P(t)* vector and the different RATs, but this solution has the disadvantage to not take into account the previous predictions. In another embodiment, part of the load is simulated as being handed over from one RAT, which has a poor predicted performance to another RAT, which has better system performance and the overall performance re-evaluated. In yet another embodiment, the simulation is for some spectrum allocated to a RAT with a high predicted performance to be released in favour of an RAT with lower performance. The re-evaluation process will then be performed. The Optimisation Loop 35 iterates until the overall system performance becomes higher than a given threshold until the number of iterations reaches an upper bound. At this time, the spectrum allocation. which has the best system performance is selected and ($L\_P(t)$; $S\_P(t)$; $E\_P(t)$) is transmitted to the Spectrum Re-Arranger 14.

The prediction feedback process corresponds to the Backward Step of Figure 7 and improves substantially the spectrum allocation prediction of the Spectrum Pattern Optimiser in terms of optimisation of the QoS and of the system capacity. This process comprises two independent steps.

In the first step, the Database 31 is updated with the latest information according to its format *Database*[i] = [*Date; Duration; Load; Spectrum Allocation; System Performance*]. This information can then be used for future predictions depending on similarities between the different situations.

The second step is more dynamic than the first one since the feedback is used in the next prediction process. The Spectrum Re-Arranger 14 transmits the final spectrum allocation that has been implemented $S\_A(t)$ and the Systems Monitoring Unit 12 transmits the real load $L\_R(t)$ and the real system performance $R\_P(t)$ after a certain time necessary to gather these statistics. The real load $L\_R(t)$ is sent to the Spectrum Allocation Predictor 33. The performance of the spectrum allocation prediction $S\_R2(t)$ is then evaluated under the real load conditions $L\_R(t)$. The process continues with the Performance Predictor *34 E\_R2(t)* and the Optimisation Loop 35. Then the different values are transmitted to a Reliability Computer 36.

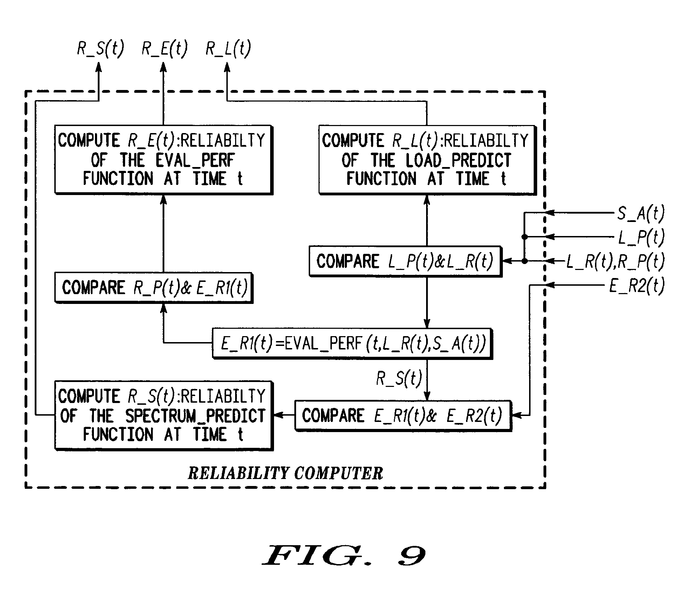

The Reliability Computer 36 gives feedback on each prediction function (Load Predictor 32, Spectrum Allocation Predictor 33, Performance Predictor 34), in order to change/adapt these prediction functions and obtain more accurate predictions. Figure 9 shows the steps in the operation of the Reliability Computer 36. It has several inputs: the real allocated spectrum $S\_A(t)$, the predicted load $L\_P(t)$, the real load $L\_R(t)$, the real system performance $R\_P(t)$ and the predicted performance $E\_R2(t)$ under the real load. Comparing $L\_P(t)$ and $L\_R(t)$ enables it to determine the reliability $R\_L(t)$ of the load prediction using statistical distribution functions.

Using the different steps shown in Figure 9, the Reliability Computer 36 also computes an estimate of the reliability of the spectrum allocation prediction function $R\_S(t)$ and the reliability $R\_E(t)$ of the performance predictor. Statistical distribution functions used for the computation of the reliabilities may be different depending on the nature of the considered parameters (Load, Spectrum, Performance).

The last step is to send the three computed reliabilities back to the targeted entities: $R\_L(t)$ is transmitted to the Load Predictor 32, $R\_S(t)$ to the Spectrum Allocation Predictor 33 and $R\_E(t)$ to the Performance Predictor 34. If the reliabilities are below than a certain threshold, the implemented prediction functions will be updated in order to enhance prediction reliabilities for the next prediction.

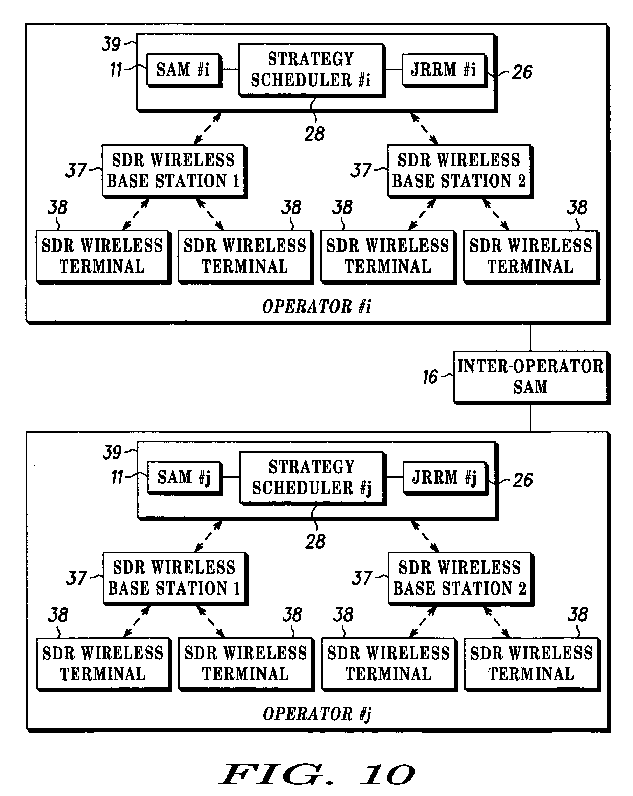

Figure 10 shows an example of the physical structure of a communication system including two operators #i and #j each having software definable radio base stations 37 and terminals 38 whose communication is controlled by a respective spectrum allocation and radio resource manager 39. The managers of the different operators are coordinated by the Inter-Operator Spectrum Allocation Manager 16 as described above.

It will be appreciated that the embodiments of the present invention described above enable a more flexible spectrum management for operators. The architecture described enables the operator to manage his spectrum depending on his needs and enables the exchange of information between operators allowing the optimisation of Guard Band size between blocks of spectrum. Furthermore, the Strategies Scheduler entity 28 allows the operator to choose the best strategy in a particular situation between Joint Radio Resource Management and Spectrum Allocation Management.

**Claims**

1. A method of radio communication between base stations (37) and terminals (38), the base stations and the terminals being capable of communication using a plurality of different radio access technologies (RAT #1, RAT #2, RAT #3), and being controllable to select the radio access technology used,
   **characterised by** allocation to different radio access technologies (RAT #1, RAT #2, RAT #3) of respective portions (7, 8, 9) of radio spectrum for communication comprising:

   establishing traffic parameters relating to traffic for the different radio access technologies,
   estimating spectrum need data ($L\_P(t)$) for the different radio access technologies in response to said traffic parameters,
   deriving from the estimated spectrum need data ($L\_P(t)$) a plurality of potential allocations ($S\_P(t)$) of said portions (7, 8, 9) of spectrum to the different radio access technologies (RAT #1, RAT #2, RAT #3),
   calculating frequency guard bands (10, 11) between frequency communication bands (7, 8, 9) of different radio access technologies (RAT #1, RAT #2, RAT #3) in the different potential spectrum allocations,

estimating performance parameters ($E\_P(t)$) of the potential allocations of spectrum with the calculated guard bands (10, 11), and

responding to said traffic parameters and to said performance parameters to select a potential allocation of spectrum ($S\_A(t)$) to be implemented by the base stations (37) and terminals (38).

2. A method of radio communication as claimed in claim 1, wherein said traffic parameters include intra-system parameters relating to interference between different radio access technologies (RAT #1, RAT #2, RAT #3) for a given radio operator.

3. A method of radio communication as claimed in claim 1 or 2, wherein said traffic parameters include inter-system parameters relating to interference between different communications for different radio operators (#i, #j, #k), frequency guard bands between frequency communication bands (1, 2, 3) of different operators being calculated and applied in said potential spectrum allocations.

4. A method of radio communication as claimed in claim 3, wherein establishing said inter-system parameters includes sending inter-operator interference information to be stored in an inter-operator store (16) and retrieving inter-operator interference information stored in said inter-operator store.

5. A method of radio communication as claimed in claim 3 or 4, wherein said frequency communication bands (1, 2, 3) of different operators (#i, #j, #k) are respective substantially continuous portions of radio spectrum.

6. A method of radio communication as claimed in any preceding claim, wherein implementing the selected spectrum allocation includes communicating at least to the relevant base stations (37) and terminals (38) the allocations of spectrum they are to use for communication.

7. A method of radio communication as claimed in any preceding claim, and including establishing potential RAT handovers of at least some of the communications between said base stations (37) and terminals (38) from one radio access technology (RAT #1, RAT #2, RAT #3) to another, responding to said potential allocations of spectrum and to said potential RAT handovers to select an allocation or an RAT handover or a combination of the two, and implementing the selected allocation or RAT handover or combination.

8. A method of radio communication as claimed in claim 7, wherein implementing the selected RAT handover for a communication between a base station (37) and a terminal (38) from one radio access technology (RAT #1, RAT #2, RAT #3) to a different radio access technology comprises continuing the communication in said different radio access technology.

9. A method of radio communication as claimed in any preceding claim, wherein implementing the selected allocation of spectrum for a communication between a base station (37) and a terminal (38) in a radio access technology (RAT #1, RAT #2, RAT #3) comprises continuing the communication in the same radio access technology with a different portion of the radio frequency spectrum.

10. A method of radio communication as claimed in any preceding claim, wherein estimating said spectrum need data comprises responding to a data base (31) of historical spectrum usage data as a function of date and time.

11. A method of radio communication as claimed in claim 10, wherein estimating said spectrum need data ($L\_P(t)$) includes estimating the reliability ($R\_L(t)$) of the estimation of spectrum need data.

12. A method of radio communication as claimed in claim 11, wherein estimating the reliability ($R\_L(t)$) of estimations of spectrum need data includes comparing actual spectrum usage data ($L\_R(t)$) with previous estimations ($L\_P(t)$) thereof.

13. Spectrum allocation apparatus for use in a method of radio communication as claimed in any preceding claim, comprising spectrum need means (32) responsive to said traffic parameters for estimating said spectrum need data ($L\_P(t)$), potential spectrum allocation means (33) responsive to said spectrum need data for deriving said plurality of potential allocations of spectrum ($S\_P(t)$), guard band means (18, 19) responsive to said potential allocations of spectrum for calculating said frequency guard bands (4, 5, 10, 11), and selection means (14) responsive to said performance parameters ($E\_P(t)$) of the potential allocations for selecting a potential allocation of spectrum ($S\_A(t)$) to be implemented by the base stations and terminals.

**14.** Communication apparatus comprising spectrum allocation apparatus as claimed in claim 13 and said base stations (37) and terminals (38).

GUARD BANDS COMPUTATION
BETWEEN BANDS?

*3*

*4*

*1*

*5*

*2*

| SPECTRUM BAND ALLOCATED TO OPERATOR #k | GB | SPECTRUM BAND ALLOCATED TO OPERATOR #i | GB | SPECTRUM BAND ALLOCATED TO OPERATOR #j |

SPECTRUM ARRANGEMENT
INSIDE THESE BANDS?

*FIG. 1*

FIG. 2

*FIG. 3*

*FIG. 4*

FIG. 5

FIG. 6

FIG. 7

$S\_A(t)$=SPECTRUM_ALLOC$(t)$

LOAD$(t-\tau)$

$L\_P(t)$
$S\_P(t)$
$E\_P(t)$

$S\_A(t)$

$L\_R(t), R\_P(t)$

$L\_P(t)$:LOAD PREDICTION
$S\_P(t)$:SPECTRUM PREDICTION
$E\_P(t)$:EVALUATION OF PERFORMANCE
$S\_A(t)$:REAL SPECTRUM ALLOCATION
$L\_R(t)$:REAL LOAD
$R\_P(t)$:REAL PERFORMANCE

REQUEST FOR A NEW SPECTRUM PREDICTION

*31* SPO DATABASE

LOAD_INFO

*32* LOAD PREDICTER

L_P(t)

*33* SPECTRUM ALLOCATION PREDICTER

S_P(t)

*34* PERFORMANCE PREDICTER

E_P(t)

*14* SPECTRUM RE-ARRANGER

S_A(t)= SPECTRUM_ALLOC(t)

UPDATE

LOAD(t-τ)

SYSTEMS MONITORING

*12*

$\left\{ \begin{array}{l} L\_P(t) \\ S\_P(t) \\ E\_P(t) \end{array} \right.$

OPTIMISATION LOOP

R_L(t):LOAD_PREDICT RELIABILITY

R_E(t):EVAL_PERF RELIABILITY

S_A(t)

R_S(t):SPECTRUM_PREDICT RELIABILITY

L_P(t)

L_R(t),R_P(t)

SYSTEMS MONITORING

*12*

RELIABILITY COMPUTER

*34* PERFORMANCE PREDICTER

S_R2(t)

SPECTRUM ALLOCATION PREDICTER

E_R2(t)

*36*

*35*

*33*

$\left\{ \begin{array}{l} L\_R(t)= \\ LOAD\_REAL(t+T) \\ R\_P(t)= \\ REAL\_PERF(t+T) \end{array} \right.$

*17* SPECTRUM PATTERN OPTIMISER

OPTIMISATION LOOP

L_P(t):LOAD_PREDICT(t)
S_P(t):SPECTRUM_PREDICT(t)
E_P(t):EVAL_PERF(t,L_P(t),S_P(t))
S_R2(t):SPECTRUM_PREDICT(t)
E_R2(t):EVAL_PERF(t,L_R(t),S_R2(t))

*FIG. 8*

EP 1 494 490 A1

FIG. 9

*FIG. 10*

**European Patent Office**

## EUROPEAN SEARCH REPORT

Application Number

EP 03 29 1608

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | GB 2 313 255 A (MOTOROLA LTD) 19 November 1997 (1997-11-19) * page 2, line 8,9 * * page 2, line 35 - page 3, line 8 * * page 7, line 22-24 * * page 8, line 20 - page 10, line 21 * * page 14, line 8 - page 16, line 8 * * claims 1,2,6 * * table 1 * | 1-14 | H04Q7/36 |
| A | YUANG M C ET AL: "MULTIPLE ACCESS CONTROL WITH INTELLIGENT BANDWIDTH ALLOCATION FOR WIRELESS ATM NETWORKS" IEEE JOURNAL ON SELECTED AREAS IN COMMUNICATIONS, IEEE INC. NEW YORK, US, vol. 18, no. 9, September 2000 (2000-09), pages 1658-1669, XP000968784 ISSN: 0733-8716 * the whole document * | 1-14 | |
| A | US 6 397 068 B1 (GANESH RAJAMANI) 28 May 2002 (2002-05-28) * column 1, line 6-11 * * column 2, line 6-10 * * column 4, line 64-67 * * column 7, line 2-4 * * column 9, line 39-41 * * figures 3A,3B * | 1-14 | TECHNICAL FIELDS SEARCHED (Int.Cl.7) H04Q H04L |

-/--

The present search report has been drawn up for all claims

| Place of search | Date of completion of the search | Examiner |
|---|---|---|
| THE HAGUE | 3 December 2003 | Pérez, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | MOHYELDIN E., MOTTE N., LUO J., DILLINGER M.: "Adaptive Radio Multihoming for Reconfigurable Terminals" SIEMENS AG, MOTOROLA S.A., [Online] 5 February 2003 (2003-02-05), XP002263580 Retrieved from the Internet: <URL:http://www4.in.tum.de/~scout/ist_paper/Adaptive_Radio_Multihoming_ISTSUMMIT2003_v03.doc> * the whole document * | 1-14 | |

TECHNICAL FIELDS
SEARCHED        (Int.Cl.7)

The present search report has been drawn up for all claims

| Place of search | Date of completion of the search | Examiner |
|---|---|---|
| THE HAGUE | 3 December 2003 | Pêrez, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                   EP 03 29 1608

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2003

| Patent document cited in search report | | Publication date | Patent family member(s) | | Publication date |
|---|---|---|---|---|---|
| GB 2313255 | A | 19-11-1997 | WO | 9744979 A2 | 27-11-1997 |
| US 6397068 | B1 | 28-05-2002 | AU | 4577501 A | 03-10-2001 |
| | | | WO | 0172059 A1 | 27-09-2001 |

EPO FORM P0459

For more details about this annex : see Official Journal of the European Patent Office, No. 12/82